# EUROPÄISCHE PATENTANMELDUNG

(11) **EP 0 990 505 A2**
(43) Veröffentlichungstag der Anmeldung: **05.04.2000**
(21) Anmeldenummer: 99115302.4
(22) Anmeldetag: 03.08.1999
(51) Int. Cl.: B29C 51/08, B29C 49/24

(54) **Verfahren zur Herstellung von Bauteilen mit Oberflächendekor**

(30) Priorität: 28.09.1998 DE 19844632
(71) Anmelder: Möller Plast GmbH, 33649 Bielefeld (DE)
(72) Erfinder: BECKMANN, Friedhelm, 32120 Hiddenhausen (DE)
(74) Vertreter: Schirmer, Siegfried, Dipl.-Ing.

(57) **Zusammenfassung**

Die Erfindung betrifft die Herstellung von Bauteilen mit Oberflächendekor, durch das auch schwierige Oberflächengeometrien mit einwandfreier Sichtfläche herstellbar sind.

Hierzu wird in einem vorgeschalteten Schritt ein die gewünschte Oberflächenkontur aufweisendes flächiges Formteil vorgefertigt, wobei die Vorfertigung in einem konturgebenden Vorformwerkzeug oder auch in konturgebenden Produktionswerkzeug durchgeführt wird. Das flächige Formteil kann beispielsweise durch Aufsprühen eines Materials auf die Oberfläche des separaten konrurgebenden Werkzeugs bzw. des Produktionswerkzeugs durchgeführt werden.

Das Oberflächendekor kann auf der Rückseite mit einem kompakten oder geschäumten Material beschichtet und anschließend vorgeformt werden.

## Beschreibung

Die Erfindung betrifft ein Verfahren zur Herstellung von Bauteilen mit Oberflächendekor, insbesondere zum Einsatz in der Automobilindustrie, wobei das flächige Dekormaterial in einem Produktionswerkzeug fixiert und ein Kunststoffschlauch extrudiert wird, der nach Erreichen einer vorgegebenen Länge an beiden Stirnseiten geschlossen und mit Überdruck aufgeblasen wird und sich dadurch an das Dekormaterial anlegt und dadurch ein Verbundbauteil gebildet wird.

Bei der Herstellung von Bauteilen mit hochwertigem Oberflächendekor wird seit einiger Zeit wegen der hohen Integrationsmöglichkeit von Funktionselementen das Blasverfahren eingesetzt. Die produzierten Bauteile können in verschiedenen Branchen, vorzugsweise in der Automobilindustrie, eingesetzt werden. Dabei wird zunächst ein flächiges Dekormaterial im Produktionswerkzeug durch geeignete Fixierstifte gehalten und anschließend ein Kunststoffschlauch extrudiert, der nach Erreichen einer gewünschten Länge an beiden Stirnseiten geschlossen und mit Überdruck aufgeblasen wird.

Dabei legt sich das noch verformbare Kunststoffmaterial an das Dekormaterial, wobei dieser Verbund dann innerhalb des Produktionswerkzeuges verstreckt und dabei zu einen durch das Produktionswerkzeug vorgegebenen Kontur ausgeformt wird. Das Dekormaterial kann dabei z. B. aus Textil, Kunststoffolie, Kunstleder oder Echtleder bestehen. Aufgrund der spezifischen Eigenschaften dieser Materialien sind dem Verformungsverhalten Grenzen gesetzt. Dieses führt zu Dünnstellen im Material oder sogar zum Einreißen der Dekorschicht. Deshalb sind schwierige Artikelgeometrien nach diesem Verfahren nicht herstellbar oder es müssen starke Qualitätseinbußen in Kauf genommen werden. Darüber hinaus führt die starke Verformung von Dekormaterialien, die eine Oberflächenstruktur aufweisen, zu Verstreckungen, bei der durchDehnungseffekte die Oberflächenstruktur verloren geht.

Der Erfindung liegt die Aufgabe zugrunde, ein Verfahren zur Herstellung von Bauteilen mit Oberflächendekor zu schaffen, durch das auch schwierige Oberflächengeometrien mit einwandfreier Sichtfläche herstellbar sind.

Diese Aufgabe wird erfindungsgemäß dadurch gelöst, daß in einem vorgeschalteten Schritt ein die gewünschten Oberflächenkonturen aufweisendes flächiges Formteil vorgefertigt wird. Es besteht die Möglichkeit, die Vorfertigung des flächigen Formteils in einem separaten konturgebenden Werkzeug oder auch im konturgebenden Produktionswerkzeug durchzuführen. Bei einer Alternativlösung wird die Vorfertigung des flächigen Formteils durch Aufsprühen eines Materials auf die Oberflächen des separaten konturgebenden Werkzeugs bzw. des Produktionswerkzeugs durchgeführt.

In Ausgestaltung der Erfindung wird das Oberflächendekor auf der Rückseite mit einem kompakten oder geschäumten Material beschichtet und anschließend vorgeformt. Vorteilhafterweise wird das vorgeformte flächige Formteil in die konturgebende Seite des Produktionswerkzeugs eingelegt und darin fixiert, wobei diese Fixierung durch Fixierungsstifte oder durch Vakuum vorgenommen werden kann. Für Sonderfälle besteht die Möglichkeit, die Rückseite des Dekormaterials mit einem Verträglichkeitsmacher zu beschichten. Dieser Verträglichkeitsmacher findet bei zunächst unverträglichen Materialkombinationen Anwendung, so daß auch in diesem Fall eine Verbindung gewährleistet ist.

Zweckmäßige Ausgestaltungen der Erfindung sind in den übrigen Unteransprüchen aufgezeigt.

Ein Ausführungsbeispiel der Erfindung ist in der Zeichnung dargestellt und wird nachfolgend näher beschrieben. Es zeigen:
- Fig. 1: eine schematische Darstellung eines separaten konturgebenden Werkzeugs im geöffneten Zustand mit verformbarem Dekormaterial;
- Fig. 2: einen Querschnitt durch ein vorverformtes Dekormaterial;
- Fig. 3: eine schematische Darstellung eines konturgebenden Produktionswerkzeugs mit eingelegtem vorgefertigten Dekormaterial und
- Fig. 4: einen Querschnitt durch ein doppelwandiges Formteil mit hinterblasenem Dekormaterial.

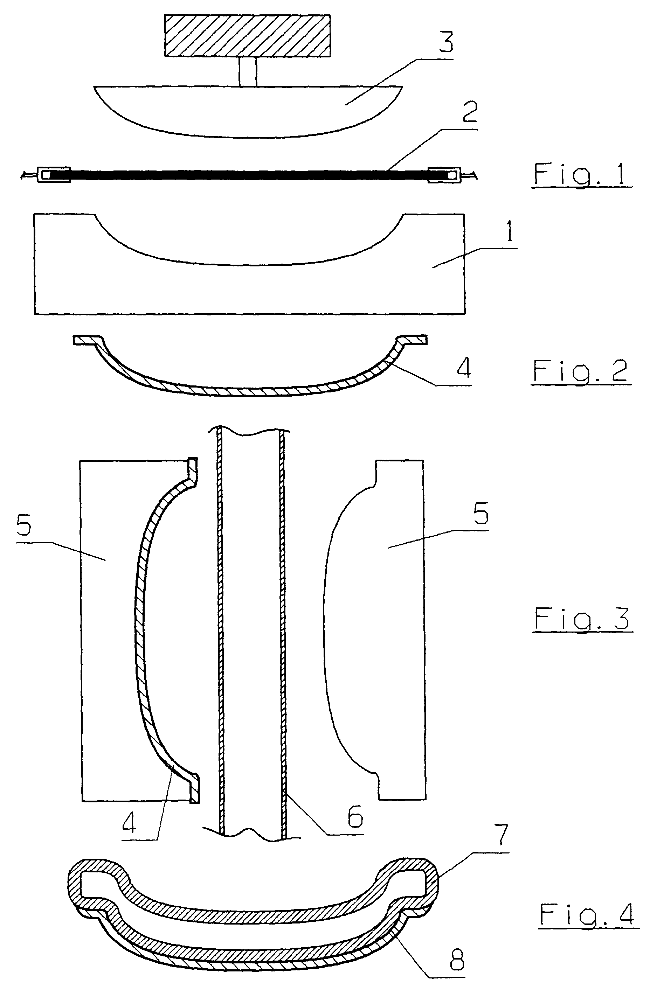

In ein separates konturgebendes Vorformwerkzeug 1 wird ein flächiges verformbares Dekormaterial 2 eingelegt und mittels Vorformstempel 3 in die als Figur 2 ersichtliche Form 4 vorgeformt.

Nach Figur 3 ist in ein konturgebendes Produktionswerkzeug 5 ein vorverformtes Dekormaterial 4 eingelegt. Der Blasschlauch ist mit 6 bezeichnet. Figur 4 zeigt ein im Blasverfahren hergestelltes doppelwandiges Hohlformteil 7 mit hinterblasenem Dekormaterial 8.

### Aufstellung der Bezugszeichen:

- 1: Vorformwerkzeug
- 2: flächiges Dekormaterial (unverformt)
- 3: Vorformstempel
- 4: flächiges Dekormaterial (vorverformt)
- 5: konturgebendes Produktionswerkzeug
- 6: Blasschlauch
- 7: Formteil
- 8: Dekormaterial (hinterblasen)

## Patentansprüche

1. Verfahren zur Herstellung von Bauteilen mit Oberflä-. chendekor, insbesondere zum Einsatz in der Automobilindustrie, wobei das flächige Dekormaterial in einem Produktionswerkzeug fixiert und ein Kunststoffschlauch extrudiert wird, der nach Erreichen einer vorgegebenen Länge an beiden Stirnseiten geschlossen und mit Überdruck aufgeblasen wird und sich dadurch an das Dekormaterial anlegt, wodurch ein Verbundteil gebildet wird, dadurch gekennzeichnet, daß in einem vorgeschalteten Schritt ein die gewünschte Oberflächenkontur aufweisendes flächiges Formteil vorgefertigt wird.

2. Verfahren nach Anspruch 1, dadurch gekennzeichnet, daß die Vorfertigung des flächigen Formteils in einem konturgebenden Vorformwerkzeug (1) durchgeführt wird.

3. Verfahren nach Anspruch 1, dadurch gekennzeichnet, daß die Vorfertigung des flächigen Formteils (2) im konturgebenden Produktionswerkzeug (5) durchgeführt wird.

4. Verfahren nach einem der Ansprüche 1 bis 3, dadurch gekennzeichnet, daß die Vorfertigung des flächigen Formteils durch Aufsprühen eines Materials auf die Oberflächen des separaten konturgebenden Werkzeugs (1) bzw. des Produktionswerkzeugs (5) durchgeführt wird.

5. Verfahren nach einem der Ansprüche 1 bis 4, dadurch gekennzeichnet, daß ein Dekormaterial (2) mit einem zur Verformung geeigneten Werkstoff hinterfüttert wird.

6. Verfahren nach Anspruch 5, dadurch gekennzeichnet, daß die Hinterfütterung aus einem durch Energiezufuhr aufschäumbaren Material gebildet ist.

7. Verfahren nach Anspruch 1, dadurch gekennzeichnet, daß das Oberflächendekor (2) auf der Rückseite mit einem kompakten und/oder geschäumten Material beschichtet und anschließend vorgeformt wird.

8. Verfahren nach einem der Ansprüche 1 bis 7, dadurch gekennzeichnet, daß das vorgeformte flächige Formteil (4) in die konturgebende Seite bzw. Seiten des Produktionswerkzeugs (5) eingelegt und darin fixiert wird.

9. Verfahren nach Anspruch 8, dadurch gekennzeichnet, daß die Fixierung durch Fixierungsstifte und/oder durch Vakuum vorgenommen wird.

10. Verfahren nach einem der Ansprüche 1 bis 9, dadurch gekennzeichnet, daß die Rückseite des Dekormaterials mit einem Verträglichkeitsmacher beschichtet wird.

11. Verfahren nach einem der Ansprüche 1 bis 10, dadurch gekennzeichnet, daß thermoplastisches Material, z.B. Polypropylen, Polyethylen, ABS, PC-ABS, Polyamid oder Polyester, eingesetzt wird.

12. Verfahren nach einem der Ansprüche 1 bis 10, dadurch gekennzeichnet, daß als Folienmaterial ein aus Thermoplast geschäumter Werkstoff eingesetzt wird.

13. Verfahren nach einem der Ansprüche 1 bis 10, daß als Folienmaterial eine Kombination aus einer dünnen kompakten Dekorschicht mit einer Schaumhinterfütterung eingesetzt wird.

14. Verfahren nach Anspruch 12 oder 13, dadurch gekennzeichnet, daß das Folienmaterial aus Polyolefinen, Polyurethan, PVC oder PVC/ABS besteht.
